# DEMANDE DE BREVET EUROPEEN

(11) **EP 1 167 318 A1**
(43) Date de publication de la demande: **02.01.2002**
(21) Numéro de dépôt: 01401647.1
(22) Date de dépôt: 21.06.2001
(51) Int. Cl.: C04B 28/02, C04B 18/10

(54) **Béton de confinement de déchets**

(30) Priorité: 22.06.2000 FR 0008037
(71) Demandeur: Yprema, 94437 Chennevieres sur Marne (FR)
(72) Inventeur: Basuyau, Vincent, 95000 Cergy (FR)
(74) Mandataire: Schmit, Christian Norbert Marie

(57) **Abrégé**

On réalise un béton de confinement de déchets à savoir un béton hydraulique fabriqué à partir de mâchefers d'incinération d'ordures ménagères. Pour permettre l'obtention d'un béton hydraulique ayant des caractéristiques satisfaisantes, en particulier un temps de prise acceptable, on ajoute dans sa composition des fumées de silice ou des cendres volantes. Une autre réalisation envisagée est l'utilisation d'un ciment pouzzolanique et d'une poudre de diatomées. On propose ainsi une solution pour stocker les mâchefers d'incinération d'ordures ménagères de manière efficace. En effet on propose une solution pour employer les mâchefers d'incinération d'ordures ménagères dans un plus grand nombre d'applications hors du domaine des emplois traditionnels de la réalisation de remblais ou de sous-couches routières. Le béton, ainsi formé, peut-être employé en comblement très efficace de cavités souterraines, en béton de pose d'éléments préfabriqués d'ouvrages routiers (bordures, regards,.,.) ou comme béton pour la fabrication d'éléments préfabriqués (blocs, éléments-poids, défenses de berges, éléments de soutènement,...).

## Description

L'invention a pour objet un béton de confinement de déchets. Le domaine d'application de l'invention est le confinement des déchets ménagés, en particulier des mâchefers. Les mâchefers sont des résidus obtenus après l'opération d'incinération des ordures ménagères. On parle de MIOM, mâchefers d'incinération d'ordures ménagères. Les mâchefers contiennent des métaux lourds et toxiques comme le plomb et le zinc. La présence de ces métaux lourds et la présence d'éléments inhibiteurs de prise du type chlorures, sulfates et matière organique dans les MIOM entraînent un temps de prise lent pour un béton hydraulique fabriqué à partir de mâchefers utilisés comme granulats. Il est alors nécessaire d'utiliser un surdosage en liant hydraulique ayant de fortes caractéristiques de prise. Un premier but de l'invention est notamment de stocker ces mâchefers sous une forme telle que les métaux lourds soient pris au piège et ne puissent plus être libérés par lixiviation. La libération de produits toxiques contenus dans les mâchefers dans l'environnement est ainsi fortement diminuée. Un deuxième but de l'invention est de diminuer le temps de prise des bétons hydrauliques réalisés à partir de ces mâchefers. Un troisième but de l'invention est d'obtenir un béton hydraulique qui ne serve pas uniquement à remblayer.

Il est connu une méthode de confinement des MIOM diminuant la quantité des métaux lourds susceptibles d'être libérés au cours de lixiviation. Dans cette méthode, le mortier réalisé à partir des mâchefers comme granulat est soumis à une contrainte. Ce mortier est obtenu en mélangeant les déchets à un liant du type susceptible d'être la source d'une réaction d'hydratation conduisant à un durcissement. Ainsi, on soumet ce mortier entre la fin de la coulée et l'instant de développement des résistances dans celui-ci à une compression. La compacité du mortier est alors améliorée : le volume poreux est fortement diminué. On constate une diminution de microfissurations, et des macrofissurations par rapport à un mortier n'ayant pas subi de contrainte. Les trajets capillaires sont donc en moindre quantité. On réduit ainsi les phénomènes de circulation des liquides dans les mortiers. Un tel mortier permet de stabiliser, de rendre inerte et d'encapsuler la plupart des déchets et notamment ceux contenant des métaux lourds toxiques de façon à éviter leurs relargage au cours d'une lixiviation. Mais un tel mortier a un temps de prise très long. Il n'est donc pas efficace dans le cas de construction.

Un mortier est un mélange constitué de sable (granulat), d'eau, d'un liant (chaud ou ciment) et éventuellement d'un adjuvant utilisé pour liaisonner les éléments d'une construction.

On connaît de l'enseignement du document DE-A-29 22 393, un béton réalisé à partir de mâchefer d'incinération de déchets, comportant une fraction de liant comprise entre 200 et 400 kg/m³.

Un béton est, quant à lui, un matériau de construction obtenu par agrégation de granulat au moyen d'un liant et spécialement par un mélange de gravier, de sable, de ciment et d'eau.

Dans le béton, le ciment est un élément actif du mélange. Il forme avec l'eau au moment du malaxage une pâte qui enrobe les granulats et donne au béton sa plasticité. L'eau quant à elle joue un rôle prépondérant sur la résistance finale ; ses caractéristiques physiques et chimiques doivent être rigoureusement contrôlées. Les granulats donnent au béton sa densité. Ils se présentent toujours sous la forme d'éléments fins en faible quantité de sables, de gravillons, de graviers ou de cailloux.

Les adjuvants sont des accélérateurs ou des retardateurs de prise, des fluidifiants, ... etc. Ils améliorent les performances du béton.

Les problèmes présentés par les mâchefers sont que ces derniers ne présentent pas de caractéristiques physiques suffisamment intéressantes pour pouvoir être utilisés autrement que comme remblai. A ce titre les traitements aux liants hydrauliques connus ont principalement servi pour conduire à un inertage des mâchefers traités. Il peut apparaître alors un problème de stockage de ces mâchefers traités, en particulier dans les îles, où la place manque, et où il n'est pas envisageable de déverser les mâchefers traités dans la mer, leur inertage n'étant pas assez abouti pour que ce déversement se réalise sans risque de pollution.

Dans l'invention, pour remédier à ces problèmes, on propose de réaliser des bétons, fortement dosés en liant en particulier du ciment, contenant non seulement des MIOM mais aussi un autre composant. Cet autre composant peut être de la fumée de silice ou encore des pouzzolanes naturelles ou des cendres volantes. Ces bétons contiennent également un adjuvant superplastifiant, permettant de diminuer le rapport E/C, à savoir le rapport eau/ciment qui est rendu élevé pour des raisons de maniabilité. Les bétons, ainsi réalisés, peuvent être utilisés non seulement pour la préfabrication grossière d'éléments de soutenance, de blocs de béton, de brises vagues mais aussi pour des emplois industriels spécifiques. Les emplois spécifiques sont des bétons de pose de bordure en travaux publics, des cunettes de regard, des bétons de sous-oeuvre en travaux publics, des bétons d'ouvrage de réseau, des bétons de remplissage (par exemple de remplissage de cavités de mines, notamment des mines d'uranium métallique), des culées de pont, des noyaux de barrage, des noyaux de digue, ou des bétons pour réaliser des endiguements. En agissant ainsi, on transforme un matériau inutile, dont autrement on chercherait à se débarrasser, en un matériau utile et utilisé sans risque.

L'invention concerne donc un béton de confinement de déchets, réalisé à partir d'un mélange granulaire comportant des mâchefers d'incinération d'ordures ménagères et d'un liant hydraulique, un dosage du liant étant fort, notamment supérieur ou égal à 300 kg/m³, caractérisé en ce que le béton comporte un accélérateur de prise.

L'invention sera mieux comprise à la description qui suit. Celle-ci n'est présentée qu'à titre indicatif et nullement limitatif de l'invention.

Une première série d'expériences a été réalisée avec des mortiers dans un souci de limitation des quantités gâchées. L'intérêt était d'obtenir une rhéologie identique à celle du béton tout en supprimant une partie des composants (fraction graveleuse). Par ailleurs un adjuvant superplastifiant a été systématiquement utilisé.

Les MIOM utilisés sont quartés et séparés en fractions granulométriques 0/5mm et 5/20 mm, de manière à constituer un sable et un gravier en vue de la confection ultérieure de bétons. Et pour déterminer le traitement le plus significatif pour la diminution du temps de prise, l'étude a d'abord été orientée sur la fraction la plus fine. En effet la fraction la plus fine est plus pénalisante que l'autre fraction car elle a une teneur plus forte en métaux lourds (zinc et plomb) et en éléments inhibiteurs de prise type chlorures, sulfates et matière organique.

Les mortiers, étudiés, sont réalisés à partir de MIOM associés à des liants hydrauliques du type CLK CEM III 32.5 et du type CPA CEM I 45.2 R. Les conditions de gâchage étaient les suivantes : température régulée à 20°C ± 0.2 et humidité relative de 71% ± 0.2, puis conservation avant démoulage en armoire humide relative à 20°C ± 1 avec une humidité relative HR ≥ 95%. La conservation après démoulage a été réalisée dans un bac d'eau régulé à 20°C. On a constaté qu'un prétrempage des MIOM était bénéfique sur le temps de prise. Après différents essais, un prétrempage d'une durée de 4 heures entraîne une division par deux ou trois du temps de prise.

A l'issue de cette série d'expériences, en constate que l'ajout de fumées de silice au mélange MIOM / liants hydrauliques permet une prise relativement rapide du mélange, avec des caractéristiques de résistance mécanique très intéressantes.

Ainsi un mélange MIOM fraction 0/2 mm / liant hydraulique du type CPA CEM I avec 20% de fumée de silice (FS) a une prise qui commence à 0.2 jour et se termine à 0.9 jour. Le temps de prise était avant l'ajout de fumée de silice de l'ordre de 12 jours dans l'eau et de 5 jours à l'air. A contrario un mélange MIOM fraction 0/2 mm / liant hydraulique du type CLK CEM III avec 9% de FS ± 1% de CA(OH)₂ a une prise qui commence à 5,0 jours et se termine à 5,9 jours. Le temps de prise était de l'ordre de 5,5 jours dans l'eau et 2 jours dans l'air.

On constate également que le retrait à l'air est le plus accentué avec le ciment CPA et en particulier la fraction 0/5mm. Le gonflement à l'eau est quant à lui le plus fort avec le ciment CLK, fraction 2/5mm.

Une lixiviation sans traitement préalable a été réalisée selon la norme X31-210, afin de doser les métaux lourds non stabilisés par le mortier. On remarque que les métaux lourds présents dans les MIOM sont quasiment stabilisés.

Une deuxième série d'expériences est réalisée sur des bétons.

Premièrement on réalise des bétons avec des fumées de silice. Les compositions des bétons sont les suivantes : On ajoute des fumées de silice avec un dosage de 30 à 150 kg/m³. Les liants utilisés sont CLK CEM III 32.5 avec un dosage de 400 kg/m³ et CPA CEM I 52.5 R de la société Calcia avec un dosage de 325 kg/m³. Le rapport E/C varie entre 0.47 et 0.88 car le gâchage est à maniabilité constante.

Le premier mélange granulaire étudié est à 100% MIOM. Le deuxième mélange est composé de sable naturel et de gravier MIOM 5/20 mm. Le troisième mélange est constitué de sable naturel et d'un gravier. Ce gravier est à 50% du gravier naturel et à 50% du gravier MIOM 5/20 mm. Et des mélanges témoins, comportant du sable et des graviers naturels, sont mis en place pour établir des comparaisons.

Un adjuvant superplastifiant, haut réducteur d'eau, Cimfluid 2000 AC de la société Axim est utilisé.

Les conditions de gâchage et de conservation sont celles décrites pour la première série d'expériences.

Les conditions d'étuvage, non systématique, sont les suivantes : on effectue d'abord une montée en température pendant deux heures puis on établit un étuvage de deux heures à 60°C et on démoule après une heure. Ensuite on effectue une montée en température pendant deux heures, puis on établit un étuvage pendant cinq heures à 60°C et on démoule après une heure.

Les MIOM subissent, comme dans le cas des mortiers, au préalable un prétrempage. A l'issue des expériences, on constate qu'on obtient une prise normale (de l'ordre de 6 heures) et des résistances mécaniques acceptables du béton type B20 au B25 avec des granulats à 100 % de MIOM. La compression à 28 jours est ainsi comprise entre 20 MPa et 30 MPa tandis que pour les mélanges témoins, la compression à 28 jours est comprise entre 34 MPa et 44 MPa.

On constate également que les gonflements et dans une moindre mesure les retraits les plus importants sont atteints pour les formulations à base de ciment type CLK. Le ciment type CPA est meilleur. Pour un ciment CLK associé à un mélange granulaire 100% MIOM, le gonflement en eau à 28 jours est supérieur à 750 µm/m. Un ciment CPA, associé à un mélange granulaire 100% MIOM, a un gonflement en eau à 28 jours inférieur à 450 µm/m.

Les MIOM contiennent une quantité élevée d'éléments inhibiteurs de prise du ciment CPA CEM I. L'utilisation de fumées de silice et l'application d'un prétrempage initial des MIOM permettent d'obtenir un temps de prise normale (inférieur à 6 heures) et des résistances mécaniques acceptables des bétons type B20 ou B25, avec des granulats à 100% de MIOM. L'intérêt apporté par les fumées de silice provient notamment de leur effet correctif sur le fuseau de la courbe granulométrique, de leur rôle pouzzolanique mais aussi de leur rôle actif dans la fixation des métaux lourds comme le plomb et le zinc ayant des propriétés d'inhibition de prise par effet d'absorption physique.

D'autres réalisations de bétons sont envisageables. Dans une variante de l'invention, on incorpore des cendres volantes à la place de la fumée de silice. Ainsi l'incorporation de cendres volantes en substitution des fumées de silice donne un temps de prise correct et des caractéristiques de résistance mécanique du mélange final acceptables. Ainsi la compression à 28 jours, pour des séries non étuvées, est comprise entre 20 MPa et 30 MPa.

La formulation suivante du béton utilise des cendres volantes silico-alumineuses en combinaisons variées avec de la chaux et du gypse. Ce choix repose sur des essais de temps de prise réalisés au préalable sur des mortiers, une durée de prise réduite étant la première caractéristique recherchée.

| CONSTITUANTS | Kg/m³ | |
|---|---|---|
| Ciment (CPA CEM I 52,5R) | 300 | |
| Cendres volantes silico-alumineuses | 114 | |
| Chaux éteinte | 47,6 | E / Liant eq =0,67 |
| Gypse | 13,6 | CV / (C+CV)=0,27 |
| Eau | 240 | |
| MIOM 0-2.5 mm | 429 | |
| MIOM 5-20 mm | 841 | |
| Adjuvant superplastifiant | 3,7∼6,9 I/m³ | |

Lors des expériences, des modes de traitement ont été mis en place. Le premier traitement A est un malaxage global immédiat de tous les constituants sans prétraitement (trempage préalable de 4 heures des MIOM et des ajouts hors liant). Le deuxième traitement B est un malaxage initial de tous les constituants sauf le ciment et l'adjuvant, suivi d'un prétraitement de 4 heures au repos, terminé par le malaxage global avec le ciment et l'adjuvant. Le troisième traitement C est un malaxage initial de tous les constituants sauf le ciment, les cendres volantes et l'adjuvant, suivi d'un prétraitement de 4 heures au repos, terminé par le malaxage global avec le ciment, les cendres volantes et l'adjuvant. Le quatrième et dernier traitement D est identique au traitement A mais il comporte en plus une addition d'un correcteur chimique.

Dans chacun des cas, la quantité d'adjuvant a été approximativement ajustée afin d'obtenir un béton très plastique.

Le tableau suivant récapitule les formulations testées avec leur mode de traitement. Les quantités indiquées sont en kg/m³ sauf pour le superplastifiant dont l'unité est I/m³.

| N° | 2 | 1 | 3 | 4 | 5 | 6 | 7 | 8 |
|---|---|---|---|---|---|---|---|---|
| Traitement | A | A | A | B | B | C | C | D |
| Ciment | 300 | 300 | 300 | 300 | 300 | 300 | 300 | 300 |
| Cendres volantes | 114 | 114 | 114 | 114 | 114 | 114 | 114 | 114 |
| Chaux éteinte | - | 48 | 48 | 48 | 48 | 48 | 48 | 48 |
| Gypse | - | - | 14 | - | 14 | - | 14 | - |
| Eau | 240 | 240 | 240 | 240 | 240 | 240 | 240 | 240 |
| MIOM 0-2.5 mm | 429 | 429 | 429 | 429 | 429 | 429 | 429 | 429 |
| MIOM 5-20 mm | 841 | 841 | 841 | 841 | 841 | 841 | 841 | 841 |
| Superplastifiant (I/m³) | 3,7 | 6,7 | 6,9 | ,6,0 | 4,3 | 5,4 | 6,9 | 6,9 |

Pour chaque formulation, on mesure les caractéristiques suivantes des bétons : l'affaissement des bétons frais, la résistance initiale à 1 jour et la résistance caractéristique à 7 jours des bétons durcis.

Les résultats montrent que l'ouvrabilité des bétons peut être atteinte en ajustant facilement le dosage en adjuvant superplastifiant. Pour les formulations présentées, la consistance du béton reste très plastique, voire fluide pour un dosage en adjuvant raisonnable. Ainsi il sera possible de diminuer le rapport eau/liant, c'est à dire E/C et par conséquent d'augmenter la résistance initiale et la résistance caractéristique à plus long terme.

On constate que tous les bétons étudiés développent une résistance à 1 jour sans observer de problèmes de prise et de durcissement.

Le tableau suivant récapitule les résistances mécaniques à la compression des bétons durcis.

| N° | 1 | 2 | 3 | 4 | 5 | 6 | 7 | 8 |
|---|---|---|---|---|---|---|---|---|
| Traitement | A | A | A | B | B | C | C | D |
| Rc 24 h (Mpa) | 3,1 | 5,5 | 4,2 | 6,7 | 6,7 | 3,8 | 8,0 | 4,9 |
| Rc 7 jours (Mpa) | 8,8 | 13,5 | 10,8 | 11,9 | 10,8 | 7,5 | 14,6 | 10,5 |

De tels bétons présentent des caractéristiques de résistance mécanique intéressantes dans leurs jeunes âges.

L'incorporation de cendres volantes en substitution des fumées de silice donne un temps de prise relativement rapide sans traitement et des résistances mécaniques relativement intéressantes aux jeunes âges.

Une réaction entre la chaux ajoutée, le sulfate de calcium, la phase alumineuse des MIOM et probablement des cendres volantes utilisées mises en relation avec une cristallisation d'ettringite massive, entraîne des gonflements massifs des bétons dans l'eau. Donc lors d'un apport de chaux, il faut faire attention au choix des cendres volantes.

Dans une variante de l'invention, on utilise un ciment pouzzolanique (CPZ CEM IV/B 32,5) et une poudre de diatomées.

Les formulations utilisées sont reportées dans le tableau suivant :

| **Kg/m**^{**3**} | **CPZ1** | **CPZ2** | **Diatomées** |
|---|---|---|---|
| Ciment | CPZ CEMIV/B, 414 | CPZ CEMIV/B, 414 | CPA CEMI 52,5R, 300 |
| Additions | - | - | Poudre de diatomées (114) |
| Eau | 240 | 240 | 263 |
| Fraction granulaire fine MIOM | 429 (0/5 mm) | 429 (0/5 mm) | 429 (0/5 mm) |
| Fraction granulaire grossière MIOM | 841 (5/20 mm) | 841 (5/20 mm) | 841 (5/20 mm) |
| Adjuvant | Cimfluid 2000 (6,5 l/mm³) | Cimfluid 2000 (6,5 l/mm³) | Cimfluid 2000 (9,5 l/mm³) |

La quantité d'adjuvant (superplastifiant Cimfluid 2000 AC de la société Axim) a été ajustée de manière à obtenir un béton très plastique.

En ce qui concerne la formulation à base de diatomées, une quantité supplémentaire d'eau et d'adjuvant a été ajoutée en raison de la forte capacité d'absorption de ces poudres de très grande finesse (surface spécifique de 680 m²/kg). A la différence avec les essais de la réalisation précédente avec les cendres volantes, il n'a pas été appliqué de traitement à base de chaux ou de gypse.

Les temps de prise sont reportés dans le tableau suivant:

| | | | |
|---|---|---|---|
| Formulations | CPZ1 | CPZ2 | Diatomées |
| Temps de prise | 24 à 36 h | 24 à 36 h | <24 h |

On constate que les temps de prise sont légèrement raccourcis pour les formulations à base de diatomées. Mais ils sont plus longs que ceux obtenus avec les fumées de silice (6 heures environ).

Une résistance à la compression intéressante est obtenue à 60 jours (16,4 MPa pour la formulation CPZ2). De plus sur deux mois, l'expansion est modérée (inférieure à 300 µm/m).

Ainsi les bétons réalisés ont une ouvrabilité satisfaisante, laquelle permettra de réduire le rapport E/C utilisé et donc d'améliorer encore les résistances mécaniques et par voie de conséquence la durabilité.

Par rapport à la réalisation avec la fumée de silice, la réalisation avec les cendres volantes et la réalisation avec le ciment pouzzolanique et la poudre de diatomées ont un coût financier moins important pour des résultats acceptables.

## Revendications

1. Béton de confinement de déchets, réalisé à partir d'un mélange granulaire comportant des mâchefers d'incinération d'ordures ménagères et d'un liant hydraulique, un dosage du liant étant fort, notamment supérieur ou égal à 300 kg/m³, **caractérisé en ce que** le béton comporte un accélérateur de prise.

2. Béton de confinement de déchets selon la revendication 1, **caractérisé en ce que** l'accélérateur de prise comporte de la fumée de silice.

3. Béton de confinement de déchets selon l'une des revendications 1 à 2, **caractérisé en ce que** l'accélérateur de prise comporte de la cendre volante.

4. Béton de confinement de déchets selon l'une des revendications 1 à 3, **caractérisé en ce que** l'accélérateur de prise comporte de la poudre de diatomée.

5. Béton de confinement de déchets selon l'une des revendications 1 à 4, **caractérisé en ce que** le béton comporte un composant supplémentaire améliorateur de prise.

6. Béton de confinement de déchets selon la revendication 5, **caractérisé en ce que** l'améliorateur de prise est un améliorateur d'ouvrabilité.

7. Béton de confinement de déchets selon l'une des revendications 1 à 6, **caractérisé en ce que** les mâchefers d'incinération d'ordures ménagères subissent un traitement préalable dit prétrempage.

8. Béton de confinement de déchets selon l'une des revendications 1 à 5, **caractérisé en ce que** le liant est un ciment CPA ou pouzzolanique.
